# DEMANDE DE BREVET EUROPEEN

(11) **EP 4 675 932 A1**
(43) Date de publication de la demande: **07.01.2026**
(21) Numéro de dépôt: 25186163.9
(22) Date de dépôt: 30.06.2025
(51) Int. Cl.: H04B 1/04, H04B 1/403, H04W 88/06

(54) **PROCEDE ET DISPOSITIF DE GESTION DE LA COHABITATION DE DEUX MODULES RADIO**

(30) Priorité: 02.07.2024 FR 2407190
(71) Demandeur: DELTA DORE, 35270 Bonnemain (FR)
(72) Inventeur: GUILLOT, Christophe, 35270 BONNEMAIN (FR); LE TUTOUR, Jean, 35270 BONNEMAIN (FR); FARQUE, Stéphane, 35270 BONNEMAIN (FR)
(74) Mandataire: Cabinet Le Guen Maillet

(57) **Abrégé**

La présente invention concerne un procédé et un dispositif de gestion de la cohabitation d'un premier et un second modules radio émettant et/ou recevant des signaux dans des bandes de fréquence, les premiers et second modules radio étant disposés dans un même boitier, le boitier comprenant une antenne associée au premier module radio et une antenne associée au second module radio. Selon l'invention, on :
- vérifie (E42) si une antenne externe au boitier est connectée au second module radio,
- interdit (E43) l'émission radio par le second module radio dans une partie des bandes de fréquence si une antenne externe au boitier n'est pas connectée au second module radio,
- autorise (E45) l'émission radio par le second module radio dans toutes les bandes de fréquence du second module radio si une antenne externe au boitier est connectée au second module radio.

## Description

### DOMAINE TECHNIQUE

La présente invention concerne un procédé et un dispositif de gestion de la cohabitation de deux modules radio émettant et/ou recevant des signaux dans des bandes de fréquence, au moins une partie des signaux émis et/ou reçus par un module radio interférant les signaux émis et/ou reçus par l'autre module radio.

### ETAT DE LA TECHNIQUE ANTERIEURE

La domotique permet aujourd'hui de commander différents équipements à distance, par exemple à l'aide d'un téléphone intelligent (Smartphone en anglais). Ces équipements sont par exemple et non limitativement une centrale d'alarme, la commande de dispositifs d'occultation d'ouvertures, un système de régulation de la température du bâtiment.

En général, la communication à distance est assurée par deux réseaux de communication distincts. Un premier réseau de communication, dit réseau local, permet au sein du bâtiment d'échanger des messages avec les équipements domotiques du bâtiment avec un dispositif centralisé. Le réseau local est par exemple un réseau local radio utilisant la bande de fréquence ISM et est de portée relativement limitée et dédié à des communications radio locales.

Le second réseau de communication est un réseau de communication étendu permettant à un utilisateur de pouvoir interroger, contrôler les équipements, quelle que soit sa position géographique. Le second réseau de communication est par exemple un réseau 3GPP de communication 4G LTE.

De manière à centraliser les équipements électriques en un unique point, le besoin de placer les deux modules radio dans un lieu commun tel que par exemple un tableau électrique est apparu. La proximité des bandes de fréquence utilisées par le premier et le second modules radio ainsi que leur positionnement dans un endroit commun perturbe le fonctionnement d'au moins un des modules radio.

A titre d'exemple, les bandes montantes (Up Link en anglais) de fréquences utilisées par le réseau de communication 4G LTE sont les suivantes ; une bande de fréquence comprise entre 703 et 748 MHz appelée bande 28, une bande de fréquence comprise entre 832 et 862 MHz appelée bande 20, une bande de fréquence comprise entre 880 et 915 MHz appelée bande 8, une bande de fréquence comprise entre 1710 et 1785 MHz appelée bande 3, une bande de fréquence comprise entre 1920 et 1980 MHz appelée bande 1 et une bande de fréquence comprise entre 2500 et 2570 MHz appelée bande 7.

La bande 'Up Link (UL)' 4G-LTE N°20 est utilisée pour l'émission de signaux de 832MHz à 862MHz. Par exemple, un modem 4G-LTE connecté à l'opérateur « Orange », dans la bande 20 utilise les fréquences 852 MHz a 862MHz, qui est très proche de la bande de fréquence ISM 868 à 870 MHz.

Le premier réseau de communication utilise deux bandes de fréquence ISM avec un canal par bande. La bande de fréquence est comprise entre 868MHz et 868,6MHz avec un canal à 868,30MHz.

Tout signal radio compris dans la bande de réception du canal perturbe la réception. Ceci ne peut être traité par des techniques classiques de filtrage puisque l'on est dans la bande de réception. Bien évidemment, plus le signal perturbateur est élevé, plus on perturbe la réception. Pour que la réception ne soit pas perturbée, il faut que la puissance du signal utile soit au-dessus de la puissance du signal radio perturbateur de quelques décibels (dB) pour que le démodulateur de la chaine de réception du premier module radio fonctionne correctement. Dans le cas présent, le rapport signal sur bruit (SNR de Signal to Noise Ratio) est de l'ordre de 7dB. Avec ce SNR, le démodulateur fonctionne correctement, c'est-à-dire que l'on a un taux d'erreur < à 0,1%.

Sur les bandes de fréquence 4G-LTE, la puissance d'émission peut monter jusqu'à 27dBm. Si l'antenne 4G-LTE et l'antenne ISM sont intégrées dans un même boitier, on a un couplage entre les antennes à 868MHz suffisamment élevé pour que dans certains cas le bruit de phase du module radio 4G-LTE généré par l'instabilité temporelle des synthétiseurs de fréquence et les non linéarités mais aussi par les bruits d'alimentations de la chaine soit à un niveau qui perturbe le signal utile du premier réseau de communication dans la bande 868 à 870 MHz.

Par exemple, lorsque l'on a une émission à 861,9MHZ de la bande 20 à la puissance maximum de 27dBm, le premier module radio perd jusqu'à une trentaine de dB de sensibilité.

Ce comportement est similaire à 868,95MHz.

La présente invention vise ainsi à proposer un procédé et un dispositif de gestion de la cohabitation de deux modules radio émettant et/ou recevant des signaux dans des bandes de fréquence, au moins une partie des signaux émis et/ou reçus par un module radio interférant les signaux émis et/ou reçus par l'autre module radio.

### EXPOSE DE L'INVENTION

A cette fin, selon un premier aspect, l'invention propose un procédé de gestion de la cohabitation d'un premier et un second modules radio émettant et/ou recevant des signaux dans des bandes de fréquence, les premier et second modules radio étant disposés dans un même boitier, le boitier comprenant une antenne associée au premier module radio et une antenne associée au second module radio, le premier module radio recevant du bruit généré par les signaux émis par l'antenne associée au second module radio comprise dans le boitier, caractérisé en ce que le procédé comporte les étapes de :
- vérification si une antenne externe au boitier est connectée au second module radio,
- interdiction de l'émission radio par le second module radio dans une partie des bandes de fréquence du second module radio si une antenne externe au boitier n'est pas connectée au second module radio interférant les signaux émis et/ou reçus par le premier module radio,
- autorisation de l'émission radio par le second module radio dans toutes les bandes de fréquence du second module radio si une antenne externe au boitier est connectée au second module radio.

L'invention concerne aussi un dispositif de gestion de la cohabitation d'un premier et un second modules radio émettant et/ou recevant des signaux dans des bandes de fréquence, les premier et second modules radio étant disposés dans un même boitier, le boitier comprenant une antenne associée au premier module radio et une antenne associée au second module radio, le premier module radio recevant du bruit généré par les signaux émis par l'antenne associée au second module radio comprise dans le boitier, caractérisé en ce que le dispositif comporte :
- des moyens de vérification si une antenne externe au boitier est connectée au second module radio,
- des moyens d'interdiction de **l'émission** radio par le second module radio dans une partie des bandes de fréquence du second module radio si une antenne externe au boitier n'est pas connectée au second module radio interférant les signaux émis et/ou reçus par le premier module radio,
- des moyens d'autorisation de l'émission radio par le second module radio dans toutes les bandes de fréquence du second module radio si une antenne externe au boitier est connectée au second module radio.

Ainsi, la présente invention permet de faire cohabiter des protocoles multi bandes avec des bandes radio proches sans utiliser un mécanisme ou un dispositif de répartition de la ressource radio par accès temporel ou par étalement de spectre ou par tout autre mécanisme ou dispositif.

Selon un mode particulier de l'invention, la bande de fréquence du premier module radio est la bande de fréquence ISM 868 à 870 MHz et les bandes de fréquence du second module radio sont les bandes 4G LTE.

Ainsi, l'exploitation des différentes bandes de fréquence LTE 4G par le second module radio est gérée automatiquement pour éviter les risques d'interférences entre le signal émis par le second module radio et les signaux émis/ou reçus par le premier module radio. Selon un mode particulier de l'invention, les bandes de fréquence interdites pour l'émission de données par le second module radio sont les bandes 8 et/ou 20 de la bande 4G LTE.

Ainsi, les pertes de sensibilités liées à la proximité des antennes du module LTE et du réseau local sont éliminées, il n'existe alors plus de désensibilisation du premier module radio sur une majorité de site, sans ajout d'une antenne externe.

Selon un mode particulier de l'invention, la vérification si une antenne externe au boitier est connectée au second module radio est effectuée à partir d'une détection d'une impédance de l'antenne externe en courant continu.

Ainsi, la présente invention permet une détection automatique de la connexion de l'antenne externe sans nécessiter un quelconque paramétrage lors d'une installation.

Selon un mode particulier de l'invention, l'impédance de l'antenne externe est une résistance.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un bâtiment dans lequel la présente invention est implémentée ;
[Fig. 2] représente un exemple d'architecture d'un dispositif de gestion de la cohabitation de deux modules radio compris dans un même boitier ;
[Fig. 3] représente un exemple d'architecture d'un commutateur d'antenne selon un mode préféré de réalisation de la présente invention ;
[Fig. 4] représente un exemple d'algorithme exécuté par un microcontrôleur selon la présente invention ;
[Fig. 5] illustre schématiquement un exemple d'architecture matérielle d'un contrôleur selon la présente invention.

### EXPOSE DETAILLE DE MODES DE REALISATION

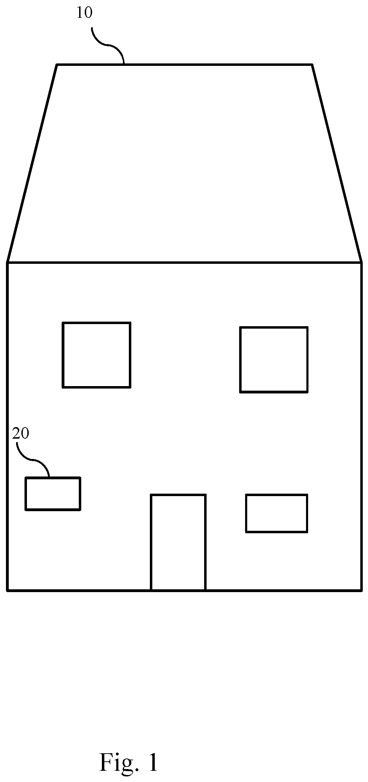

La **Fig. 1** représente un bâtiment dans lequel la présente invention est implémentée.

Le bâtiment 10 comporte un système de domotique permettant de contrôler l'ouverture de dispositifs d'occultation de fenêtres et/ou de contrôler des moyens de chauffage du bâtiment et/ou de contrôler un système d'alarme anti-intrusion.

Le bâtiment comporte un dispositif de gestion 20 de la cohabitation de deux modules radio compris dans le même boitier.

Par exemple, un premier module radio fonctionne dans au moins une bande de fréquence ISM et un seconde module radio fonctionne dans au moins une bande de fréquence 4G LTE.

Le dispositif de gestion 20 de la cohabitation de deux modules radio compris dans le même boitier est par exemple placé dans un tableau électrique du bâtiment 10.

Le bâtiment 10 est dans la zone de couverture du premier réseau de communication radio. Le premier réseau de communication est un réseau domestique tel que par exemple un réseau de communication commercialisé par la demanderesse sous le nom commercial X3D ou un réseau de communication de type Zigbee ou Lora.

Le bâtiment 10 est dans la zone de couverture du second réseau de communication radio. Le second réseau de communication est un réseau étendu tel que par le réseau de télécommunication cellulaire LTE 4G.

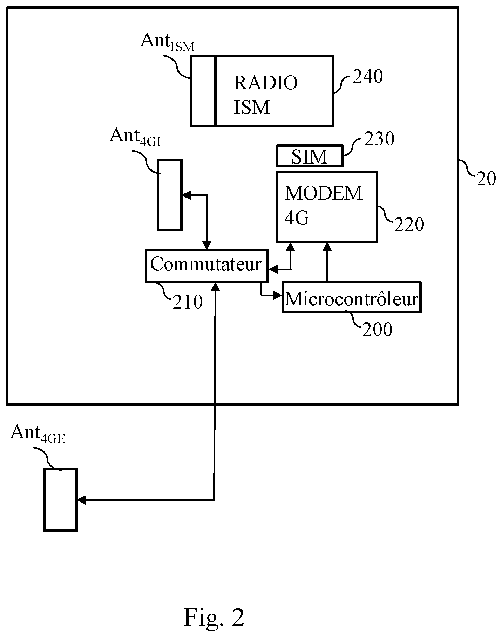

La **Fig. 2** représente un exemple d'architecture d'un dispositif de gestion de la cohabitation de deux modules radio compris dans un même boitier.

Le dispositif 20 de gestion de la cohabitation de deux modules radio compris dans un même boitier comporte un microcontrôleur 200, un premier module de communication ISM 240, une antenne radio Ant_{ISM}, un second module de communication Modem 4G 220 auquel sont associés une carte SIM 230, une antenne radio Ant_{4GI}, un commutateur 210 et une liaison vers une éventuelle antenne Ant_{4GE}.

L'antenne Ant_{4GE} externe au dispositif 20 de gestion de la cohabitation de deux modules radio compris dans un même boitier peut éventuellement être reliée ou non au commutateur 210.

Le commutateur 210 est relié à l'entrée/sortie du second module radio 220 modem 4G et dirige les signaux radio émis par le second module radio 220 modem 4G vers l'antenne interne Ant_{4GI} en l'absence de la présence de l'antenne externe Ant_{4GE}.Le commutateur 210 dirige les signaux radio reçus par l'antenne interne Ant_{4GI} vers le second module radio 220 modem 4G en l'absence de la présence de l'antenne externe Ant_{4GE}.

Lorsque l'antenne externe Ant_{4GI} est présente, le commutateur relie le second module radio 220 modem 4G à l'antenne externe Ant_{4GE}.

Les antennes Ant_{ISM} et Ant_{4GI} étant proches, on a un couplage entre les antennes Ant_{ISM} et Ant_{4GI}, par exemple à 868MHz, suffisamment élevé pour que dans certains cas le bruit de phase du module radio 4G-LTE généré par l'instabilité temporelle des synthétiseurs de fréquence et les non linéarités mais aussi par les bruits d'alimentations de la chaine soit à un niveau qui perturbe le signal utile du premier réseau de communication dans la bande 868MHZ à 870 MHz.

Le commutateur 210 comporte selon un mode préféré de réalisation, des moyens de détection de la présence d'une antenne externe Ant_{4GE} et assure automatiquement la sélection de l'antenne Ant_{4GE} et Ant_{4GI}.

En variante, la sélection de l'antenne est commandée par le microcontrôleur 200.

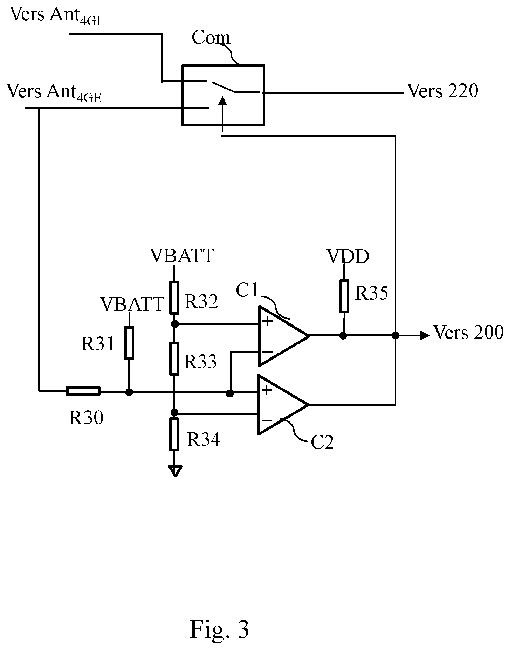

La **Fig. 3** représente un exemple d'architecture d'un commutateur d'antenne selon un mode préféré de réalisation de la présente invention.

Selon le mode préféré, le commutateur 210 comporte des moyens de détection de la présence d'une antenne externe et de connexion de l'antenne externe Ant_{4GE} au second module radio modem 4G 230. L'antenne externe Ant_{4GE} est par exemple une antenne dipôle aux bornes de laquelle est connectée une résistance présentant une impédance de 10K Ohms.

Le commutateur 210 comporte un commutateur Com, deux comparateurs C1 et C2 et six résistances R30 à R35.

Le commutateur 210 comporte des moyens de détection d'une valeur de l'impédance à l'entrée pour la connexion de l'antenne externe Ant_{4GE} Si l'impédance à son entrée est comprise entre une première et une seconde valeurs prédéterminées, le commutateur 200 commande le basculement du commutateur Com dans une position dans laquelle l'antenne externe Ant_{4GE} est reliée à un module radio modem 4G 230.

Si l'impédance à l'entrée du commutateur 210 est inférieure à la première valeur prédéterminée ou supérieure à la seconde valeur prédéterminée, le commutateur 210 commande le basculement du commutateur Com dans une position dans laquelle l'antenne interne Ant_{4GI} est reliée au module radio modem 4G 230.

Les moyens de détection d'une valeur de l'impédance à l'entrée du dispositif 100 de détection de la présence d'une antenne externe et de connexion de l'antenne externe à un module radio sont constitués des deux comparateurs C1 et C2 et des résistances R30 à R35. Dans un mode particulier, les moyens de détection d'une valeur de l'impédance comportent des moyens de blocage des fréquences HF.

La résistance interne pour un courant continu de l'antenne externe Ant_{4GE} a par exemple une valeur égale à 10KOhms.

La résistance R30 a une valeur par exemple égale à 4,7KOhms, la résistance R31 a une valeur par exemple égale à 47KOhms, la résistance R32 a une valeur par exemple égale à 47KOhms, la résistance R33 a une valeur par exemple égale à 10KOhms, la résistance R34 a une valeur par exemple égale à 10KOhms et la résistance R35 a une valeur par exemple égale à 100KOhms.

Une première terminaison de la résistance R30 est reliée à l'entrée permettant la connexion de l'antenne externe Ant_{4GE}.

Une seconde terminaison de la résistance R30 est reliée à une première terminaison de la résistance R31, à une entrée négative du comparateur C1 et à une entrée positive du comparateur C2.

Une seconde terminaison de la résistance R31 est connectée à une alimentation VBATT par exemple de 3,8 Volts.

Une première terminaison de la résistance R32 est connectée à l'alimentation VBATT et une seconde terminaison de la résistance R32 est reliée à une première terminaison de la résistance R33 et à l'entrée positive du comparateur C1.

Une seconde terminaison de la résistance R33 est reliée à une première terminaison de la résistance R34 et à l'entrée négative du comparateur C2.

Une seconde terminaison de la résistance R34 est reliée à la masse.

Les sorties des comparateurs C1 et C2 sont reliées à une première terminaison de la résistance R35, à une entrée du microcontrôleur 200 et commandent le commutateur Com. Si l'antenne externe Ant_{4GE} est connectée au commutateur 210, la résistance R présente sur l'antenne extérieure Ant_{4GE} forme un pont diviseur de tension que les comparateurs C1 et C2 détectent. Les comparateurs C1 et C2 positionnent en conséquence le commutateur Com de manière à ce que l'antenne extérieure Ant_{4GE} soit reliée au module radio modem 4G 230.

Si l'antenne externe Ant_{4GE} n'est pas connectée au commutateur 210, l'impédance devient alors quasi infinie et le commutateur Com est positionné de manière à ce que l'antenne interne Ant_{4GI} soit reliée au module radio modem 4G 230.

Si un bouchon 50Ω est connecté au commutateur 210, le bouchon a une impédance très faible par rapport à la résistance de 10KOhm, la valeur du pont diviseur formé avec la résistance R devient différente des deux cas précédents et les comparateurs C1 et C2 positionnent en conséquence le commutateur Com de manière à ce que l'antenne interne Ant_{4GI} soit reliée au module radio modem 4G 230.

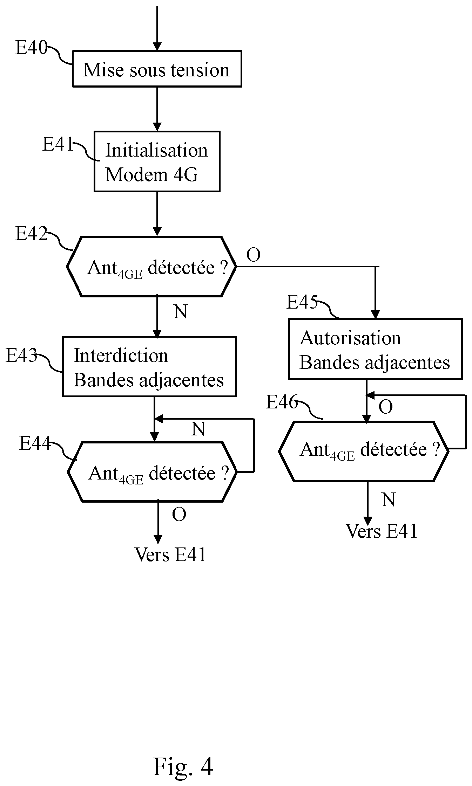

La Fig. 4 représente un exemple d'algorithme exécuté par un microcontrôleur selon la présente invention.

A l'étape E40, le microcontrôleur 200 initialise le présent algorithme.

A l'étape E41, le microcontrôleur 200 initialise le second module radio Modem 4G 230 et commande l'interdiction de l'émission sur des bandes de fréquence susceptibles de générer du bruit dans au moins une bande de fréquence ISM.

A l'étape E42, le microcontrôleur 200 vérifie si une antenne extérieure Ant_{4GE} est présente. Selon le mode préféré de réalisation, le microcontrôleur 200 vérifie le signal en sortie des comparateurs C1 et C2. En variante, lors de l'installation de l'antenne extérieure Ant_{4GE}, une information prédéterminée est mémorisée dans la mémoire interne du microcontrôleur 200.

Dans la négative, le microcontrôleur 200 passe à l'étape E43. Dans l'affirmative, le microcontrôleur 200 passe à l'étape E45.

A l'étape E43, le microcontrôleur 200 commande au second module radio Modem 4G 230 l'interdiction de l'émission radio sur des bandes de fréquence susceptibles de générer du bruit dans au moins une bande de fréquence ISM, par exemple les bandes de fréquence 8 et 20 susmentionnées.

A l'étape E44, le microcontrôleur 200 vérifie si une antenne extérieure Ant_{4GE} est présente. Dans la négative, le microcontrôleur 200 retourne à l'étape E44. Dans l'affirmative, le microcontrôleur 200 passe à l'étape E41.

A l'étape E45, le microcontrôleur 200 commande au second module radio Modem 4G 230 l'autorisation de l'émission radio sur des bandes de fréquence susceptibles de générer du bruit dans au moins une bande de fréquence ISM, par exemple les bandes de fréquence 8 et 20 susmentionnées.

A l'étape E46, le microcontrôleur 200 vérifie si une antenne extérieure Ant_{4GE} est présente. Dans la négative, le microcontrôleur 200 retourne à l'étape E41. Dans l'affirmative, le microcontrôleur 200 retourne à l'étape E46.

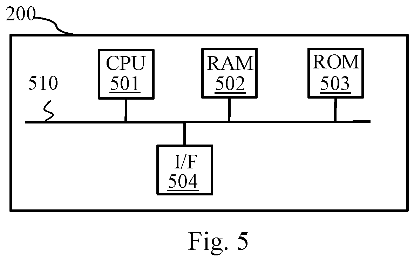

La **Fig. 5** illustre schématiquement un exemple d'architecture matérielle d'un microcontrôleur selon la présente invention.

La Fig. 5 illustre schématiquement un exemple d'architecture matérielle du microcontrôleur 200. Le microcontrôleur 200 comporte alors, reliés par un bus de communication 510 : un processeur ou CPU (« Central Processing Unit » en anglais) 501 ; une mémoire vive RAM (« Random Access Memory » en anglais) 502 ; une mémoire non volatile ROM (« Read Only Memory » en anglais) 503, par exemple de type FLASH et une interface 504 permettant de communiquer le commutateur 210 le second module radio Modem 4G 230.

Le processeur 501 est capable d'exécuter des instructions chargées dans la RAM 502 à partir de la ROM 503, d'une mémoire externe (non représentée), ou d'un réseau de communication. Lorsque le microcontrôleur 200 est mis sous tension, le processeur 501 est capable de lire de la RAM 502 des instructions et de les exécuter. Ces instructions forment un programme d'ordinateur causant l'implémentation, par le processeur 501, de tout ou partie des algorithmes et étapes décrits ici en relation avec le microcontrôleur 200.

Ainsi, tout ou partie des algorithmes et étapes décrits en relation avec le microcontrôleur 200 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

## Revendications

1. Procédé de gestion de la cohabitation d'un premier et un second modules radio émettant et/ou recevant des signaux dans des bandes de fréquence, les premiers et second modules radio étant disposés dans un même boitier, le boitier comprenant une antenne associée au premier module radio et une antenne associée au second module radio, le premier module radio recevant du bruit généré par les signaux émis par l'antenne associée au second module radio comprise dans le boitier, **caractérisé en ce que** le procédé comporte les étapes de :
- vérification (E42) si une antenne externe au boitier est connectée au second module radio,
- interdiction (E43) de l'émission radio par le second module radio dans une partie des bandes de fréquence du second module radio si une antenne externe au boitier n'est pas connectée au second module radio interférant les signaux émis et/ou reçus par le premier module radio ,
- autorisation (E45) de l'émission radio par le second module radio dans toutes les bandes de fréquence du second module radio si une antenne externe au boitier est connectée au second module radio.

2. Procédé selon la revendication 1, **caractérisé en ce que** la bande de fréquence du premier module radio est la bande de fréquence ISM 868 à 870 MHz et les bandes de fréquence du second module radio sont les bandes 4G LTE.

3. Procédé selon la revendication 2, **caractérisé en ce que** les bandes de fréquence interdites pour l'émission de données par le second module radio sont les bandes 8 et/ou 20 et/ou 7 de la bande 4G LTE.

4. Dispositif de gestion de la cohabitation d'un premier et un second modules radio émettant et/ou recevant des signaux dans des bandes de fréquence, les premiers et second modules radio étant disposés dans un même boitier, le boitier comprenant une antenne associée au premier module radio et une antenne associée au second module radio, le premier module radio recevant du bruit généré par les signaux émis par l'antenne associée au second module radio comprise dans le boitier, **caractérisé en ce que** le dispositif comporte :
- des moyens de vérification si une antenne externe au boitier est connectée au second module radio,
- des moyens d'interdiction de l'émission radio par le second module radio dans une partie des bandes de fréquence du second module radio si une antenne externe au boitier n'est pas connectée au second module radio interférant les signaux émis et/ou reçus par le premier module radio ,
- des moyens d'autorisation de l'émission radio par le second module radio dans toutes les bandes de fréquence du second module radio si une antenne externe au boitier est connectée au second module radio.

5. Dispositif selon la revendication 4, **caractérisé en ce que** la vérification si une antenne externe au boitier est connectée au second module radio est effectuée à partir d'une détection d'une impédance de l'antenne externe en courant continu.

6. Dispositif selon la revendication 5, **caractérisé en ce que** l'impédance de l'antenne externe est une résistance.
